# EUROPÄISCHE PATENTANMELDUNG

(11) **EP 2 927 102 A2**
(43) Veröffentlichungstag der Anmeldung: **07.10.2015**
(21) Anmeldenummer: 15000881.1
(22) Anmeldetag: 25.03.2015
(51) Int. Cl.: B62D 33/04

(54) **TRANSPORTMULDE FÜR DEN TRANSPORT VON HEISSEN GÜTERN**

(30) Priorität: 04.04.2014 DE 202014101605 U; 11.07.2014 DE 202014103190 U
(71) Anmelder: Langendorf GmbH, 45731 Waltrop (DE)
(72) Erfinder: Strautmann, Klaus-Peter, 48291 Telgte (DE); Neuhaus, Uwe, 44575 Castrop-Rauxel (DE)
(74) Vertreter: Hoffmeister, Helmut

(57) **Zusammenfassung**

Die Erfindung betrifft eine Transportmulde für den Transport von heißen Gütern, wie Asphalt, Bitumen und/oder Asphaltmischgut, umfassend einen Muldenboden, zwei Seitenwände (4), eine Stirnwand und eine Rückwand, wobei wenigstens die Seitenwände (4) jeweils aus thermisch entkoppelten metallenen Deckschichten (2, 3) gebildet sind, zwischen denen eine Dämmstoffschicht von niedriger Wärmeleitfähigkeit angeordnet ist. Die Erfindung betrifft auch einen mit einer solchen Transportmulde ausgerüsteten Sattelkipper oder Anhänger.

Gemäß Erfindung sind die Deckschichten (2, 3) miteinander über wenigstens ein thermoisolierendes und mechanisch stabilisierendes Abstandsprofil (5) verbunden, wobei die Dämmstoffschicht zwischen den Deckschichten (2, 3) und den sich benachbarten Abstandsprofilen angeordnet ist.

Das Abstandsprofil (5) ist massiv ausgeführt und weist wenigstens zwei voneinander beabstandete, in Längsrichtung des Abstandsprofils (5) verlaufende Nuten (6, 6', 7, 7') auf.

Die Deckschichten (2, 3) weisen wiederum jeweils wenigstens ein das Abstandsprofil (5) aufnehmendes Halteprofil (8, 8') auf, wobei das Abstandsprofil (5) formschlüssig mit den Deckschichten (2, 3) verbunden ist, indem die Halteprofile (8, 8') in die Nuten (6, 6', 7, 7') des Abstandsprofils (5) ineinandergreifen.

## Beschreibung

Die Erfindung betrifft eine Transportmulde für den Transport von heißen Gütern, wie Asphalt, Bitumen und/oder Asphaltmischgut, umfassend einen Muldenboden, zwei Seitenwände, eine Stirnwand und eine Rückwand, wobei wenigstens die Seitenwände jeweils aus thermisch entkoppelten metallenen Deckschichten gebildet sind, zwischen denen eine Dämmstoffschicht von niedriger Wärmeleitfähigkeit angeordnet ist. Die Erfindung betrifft auch einen mit einer solchen Transportmulde ausgerüsteten Sattelkipper oder Anhänger.

Eine Transportmulde der im Oberbegriff beschriebenen Art lässt sich der EP 0 375 621 A1 entnehmen. Um insbesondere größere, thermisch entkoppelte Seitenwandungen zu verstärken, schlägt die bekannte Lösung die Anbringung zusätzlicher Mittelpfosten vor. Die zusätzlichen Mittelpfosten sind zweiteilig ausgebildet und verstärken die Kippmulde von der Außen- und der Innenseite. Die Mittelpfosten üben damit von außen und innen eine Druckkraft auf die Seitenwandung aus. Insgesamt zeichnen sich die Muldenwände durch ein erhebliches Gewicht und einen aufwendigen und teuren Aufbau aus, weisen jedoch unzureichende mechanische Stabilität auf. Für den Transport von Heißmischgut ist die Kippmulde wenig geeignet, da die Muldenwände sich infolge der thermischen Beanspruchung, insbesondere zwischen den Mittelpfosten deformieren können.

Mehrere in den letzten Jahren durchgeführte Forschungsvorhaben haben gezeigt, dass bei der Herstellung von Asphaltbefestigungen neben dem Einbauprozess und der sicheren Einhaltung von Anforderungen aus dem technischen Regelwerk an den Baustoff Asphalt selbst (insbesondere die Temperatur) auch der Transport des Asphaltmischgutes besonderer Beachtung bedarf.

Die einschlägigen amtlichen Regelwerke sehen strengere Anforderungen an die Transportfahrzeuge von Asphaltmischgut vor. Stufenweise sollen insbesondere die eingesetzten Transportmulden thermoisoliert werden. Beim Einsatz von Muldenfahrzeugen mit oder ohne Kippfunktion ist danach der Einsatz von thermoisolierten Halbrundmulden vorteilhaft, da - bedingt durch die Geometrie - weniger kritische Anhaftungspunkte des Asphaltmischgutes in den Eckpunkten der Mulde existieren. Gleichwohl werden Kastenmulden als gleichwertig betrachtet. Um eine ausreichende Thermoisolation der Transportmulden sicherzustellen, muss der Wand-/Muldenaufbau inklusive des verwendeten Dämmstoffes mindestens einen Wärmedurchlasswiderstand (R-Wert) von ≥ 1,65 m² K/W bei 20 °C aufweisen. Der verwendete Dämmstoff muss eine langfristige Temperaturbeständigkeit bis 200 °C aufweisen.

Die Aufgabe der Erfindung ist, eine Transportmulde der eingangs genannten Art zu entwickeln, deren Muldenwände ohne zusätzliche seitlichen Verstärkungen auskommen und trotzdem eine ausreichende mechanische Stabilität gewährleisten können. Dabei soll die Transportmulde den gesetzlichen Anforderungen gerecht werden.

Diese Aufgabe ist durch eine gattungsgemäße Transportmulde gelöst, bei der
- die Deckschichten miteinander über wenigstens ein thermoisolierendes und mechanisch stabilisierendes Abstandsprofil verbunden sind,
- wobei die Dämmstoffschicht zwischen den Deckschichten und den sich benachbarten Abstandsprofilen angeordnet ist.

Vorteilhafte Weiterbildungen ergeben sich aus den Unteransprüchen.

Die Abstandsprofile bestehen aus einem Werkstoff mit niedriger Wärmeleitfähigkeit und hoher Temperaturbeständigkeit. Vorzugsweise handelt es sich bei dem Werkstoff um ein massives Kunststoffelement mit den genannten Eigenschaften, wie etwa einen vollen Stab mit länglichen Nuten zur Aufnahme von Halteprofilen. Die Halteprofile können mit den Deckschichten verbunden oder in einem Materialstück mit den Deckschichten, z.B. als Strangpressprofil ausgeführt sein. Eine Verbindung des Halteprofils mit der Deckschicht kann durch Nieten, Verschraubung, vorzugsweise durch Kleben oder Schweißen erfolgen.

Durch die in der Seitenwand angeordneten Abstandsprofile können Zug- und Druckkräfte zwischen der äußeren und der inneren Deckschicht übertragen werden. Durch Übertragung der Kräfte ergibt sich bei vergleichbarer Dimensionierung ein höheres Widerstandsmoment der Seitenwand als durch die Ausübung von Druckkräften von außen, wie es bei der bekannten Konstruktion gemäß EP 0 375 621 A1der Fall ist. Zwei durch innere Abstandsprofile gekoppelte Wandungen sind stabiler als zwei Wandungen, die jeweils durch äußere Rungen, aber innerlich nicht gekoppelt sind. Zudem bilden Seitenwände mit inneren Rungen bei Kippmulden Widerstandsbereiche aus, die das Abkippen von Ladung erschweren.

Durch eine schräge Anordnung der Stege in den Übergangsbereichen zwischen dem Muldenboden und den umlaufenden Muldenwänden sowie zwischen den Seitenwänden und der Stirnwand und/oder Rückwand (Heckklappe) wird der Wärmeverlust des auf den Stegen liegenden heißen Gutes entsprechend reduziert, so dass ein Ankleben des Gutes durch zu starkes Abkühlen vermieden werden kann.

Als Dämmstoff kommt geschäumter Kunststoff, wie Polyurethanschaum, Phenolharzhartschaum, Melaminharzschaum, Formaldehydharz, anorganischer Wärmedämmstoff, wie Mineralwolle, darin Steinwolle oder Glaswolle oder Hochtemperaturvlies in Frage.

Die Transportmulde gemäß Erfindung ermöglicht eine gleichmäßige Entladung, insbesondere in eine Asphalttiermaschine. Das heiße Gut kühlt sich auf dem Weg zur Entladestelle nur geringfügig ab. Auch in den übrigen, senkrecht zum Muldenboden ausgerichteten Übergangsbereichen an der Muldenwand bilden sich keine kalten Flecken, die eine verminderte Qualität der zu verlegten Asphaltdecke hervorrufen könnten.

Weiterhin kann der Erfindungsgedanke bei der Herstellung von Kühlfahrzeugen für den Straßen- oder Schienenverkehr gute Dienste leisten.

Die Erfindung ist nachstehend in einem Ausführungsbeispiel anhand der Zeichnung näher erläutert. Die Figuren zeigen:
- Fig. 1: eine Transportmulde in einer Draufsicht auf einen Muldenboden, in einer schematischen Darstellung;
- Fig. 2: eine schematische Ansicht auf eine Seitenwand der Transportmulde;
- Fig. 3: einen Schnitt B-B durch einen Teilbereich der Seitenwand gemäß Fig. 2;
- Fig. 4: die Transportmulde gemäß Fig. 1 in einem Querschnitt durch Seitenwände und Muldenboden gesehen;
- Fig. 5: eine andere Ausführung der Seitenwand gemäß Fig. 3, mit zusätzlichen seitlichen Paneelen;
- Fig. 6: einen Übergangsbereich zwischen der Stirnwand und Seitenwand, in einer schematischen Ansicht;
- Fig. 7: einen Übergangsbereich zwischen der Seitenwand und dem Muldenboden, ebenso in einer schematischen Ansicht;
- Fig. 8: ein profiliertes Paneel der Deckschicht, in einem Schnitt;
- Fig. 9: Detail einer Klickverbindung zweier Paneele gemäß Fig. 8, in einer vergrößerten Schnittdarstellung;
- Fig. 10: die Paneele der Deckschicht vor dem Einrasten ihrer Außenkanten ineinander, in einer perspektivischen Ansicht;
- Fig. 11: die Paneele der Deckschicht nach dem Einrasten ineinander, in einer perspektivischen Ansicht;
- Fig. 12: eine Verbindung zweier Deckschichten vermittels des Abstandsprofils, in einer vergrößerten Schnittdarstellung;
- Fig. 13: die Verbindung gemäß Fig. 12, wobei die innere Deckschicht eine durchgehend glatte Außenfläche aufweist;
- Figuren 14 bis 16: unterschiedliche Halteprofile zur Aufnahme des Abstandsprofils, jeweils in einem schematischen Schnitt.

Gleiche oder ähnliche Elemente können in den nachfolgenden Figuren mit gleichen oder ähnlichen Bezugszeichen versehen sein. Ferner enthalten die Figuren der Zeichnung, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht näher beschriebenen Kombinationen zusammengeführt werden können.

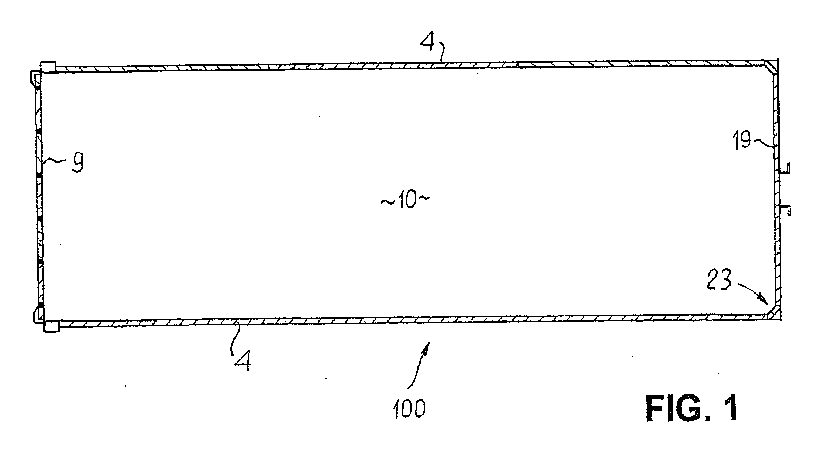

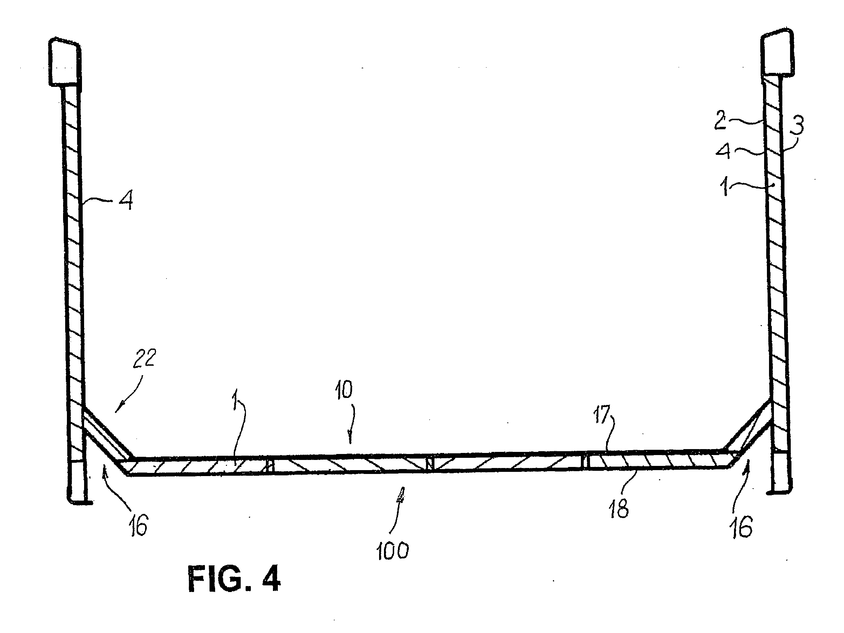

In Figuren 1 und 4 ist eine kastenartige Transportmulde 100 eines nicht dargestellten Muldenkippers schematisch gezeigt, umfassend zwei längliche Seitenwände 4, eine Rückwand 9 (Heckklappe), eine Stirnwand 19 und einen Muldenboden 10. Alle genannten Teile der Transportmulde 100 sind jeweils mit einer Dämmstoffschicht 1 von niedriger Wärmeleitfähigkeit isoliert. Die Dämmstoffschichten 1 in Form von vorgefertigten Polyurethan-Schaumplatten sind zwischen zwei voneinander beabstandete Deckschichten 2, 3 der Seitenwände 4 bzw. zwischen ein inneres und äußeres Aluminiumblech 17, 18 des Muldenbodens 10 eingeschoben. Ein Ausschäumen in situ ist auch möglich, falls die Thermoisolierung aus polymerischen Schäumen bestehen soll. Die Dämmstoffschicht 1 besteht im vorliegenden Fall aus geschäumten, preiswerten Polyurethan-Schaumplatten.

Die Deckschicht 2 ist im zusammengefügten Zustand der Transportmulde 100 auf den Muldenboden 10 gerichtet, dagegen die zweite, äußere Deckschicht 3 eine Außenhaut der Seitenwand 4 bildet. Die beiden Deckschichten 2, 3 sind aus Aluminium hergestellt und können als "Alubleche" bezeichnet werden.

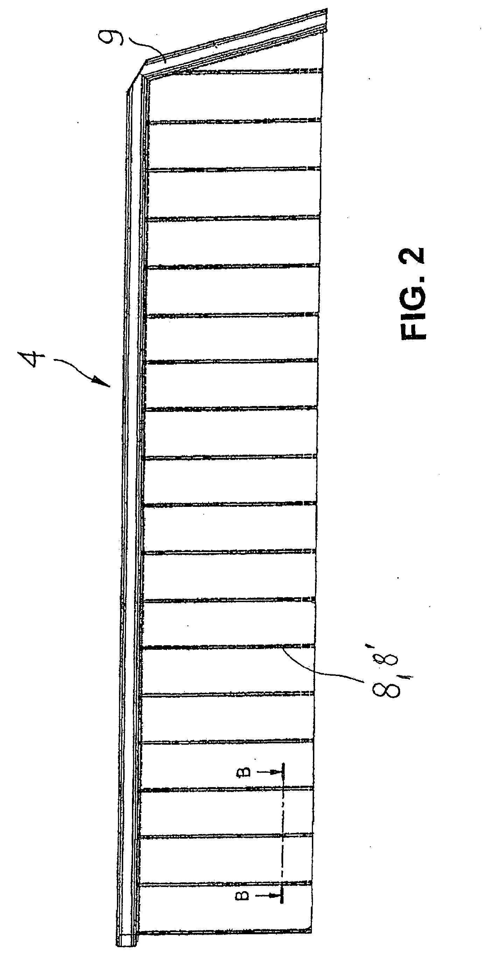

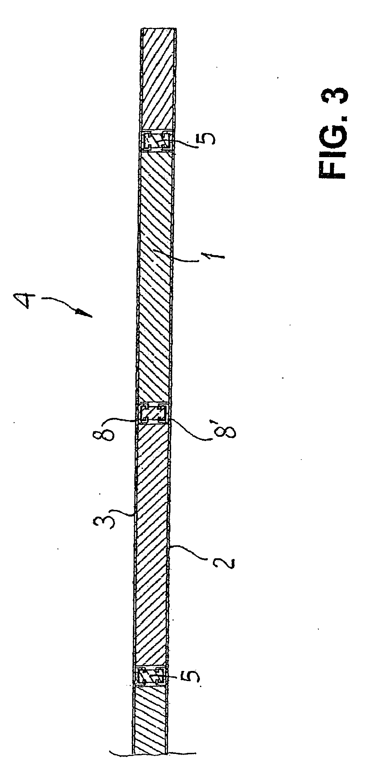

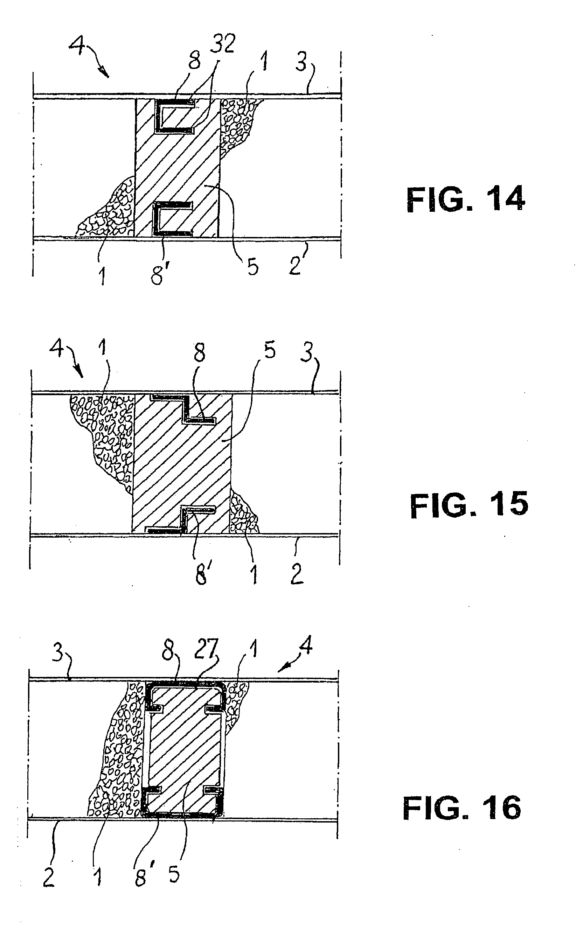

Wie die Fig. 2 zeigt, sind an der Seitenwand 4 in vordefinierten Abständen senkrecht zum Muldenboden 10 verlaufende Halteprofile 8 bzw. 8' angeordnet, welche gemäß Figuren 3 und 16 als C-Profile gefertigt sind. Die C-Profile weisen jeweils einen mit der Deckschicht 2 und 3 vorzugsweise verklebten oder verschweißten Mittelsteg 27 und zwei nach innen abgewinkelte C-Schenkel 11, 11' auf, welche in entsprechende Nuten 6, 6', 7, 7' eines Abstandsprofils 5 eingreifen.

In Fig. 14 sind C-förmige Halteprofile 8, 8' dargestellt, welche mit ihren C-Schenkeln 32 in Längsrichtung der Seitenwand 4 gerichtet sind. Die Halteprofile 8, 8' können auch L- oder Z-förmig sein (vgl. Fig. 15). Wichtig ist, dass die Halteprofile 8, 8' formschlüssig mit den Abstandsprofilen 5 verbunden sein können. Für die vorliegende Erfindung scheinen die in Fig. 16 gezeigten Halte- und Abstandsprofile am günstigsten zu sein.

Das Abstandsprofil 5 ist aus einem thermoisolierenden, hitzebeständigen Kunststoff, vorzugsweise in massiver Ausführung aus Duroplast gefertigt. Das thermoisolierende Abstandsprofil 5 wirkt zugleich als mechanisch stabilisierendes, Zugkräfte übertragendes Verstärkungselement. Auf dieser Weise können die beiden Deckschichten 2, 3, einschließlich der daran befestigten Halteprofile 8, 8' mechanisch miteinander verbunden und thermisch voneinander entkoppelt sein.

Bei dem Muldenboden 10 (vgl. Fig. 4) hingegen kann auf die Halteprofile 8, 8' und thermoisolierende Abstandsprofile 5 verzichten werden. Hier genügt es, zwischen dem Innenblech 17 und Außenblech 18 eine Dämmstoffschicht 1 anzuordnen. Dabei ist das Innenblech 17 gegenüber dem Außenblech 18 verkürzt ausgebildet, um keine Wärmebrücke in den in Fig. 4 gezeigten Eckbereichen 16 entstehen zu lassen.

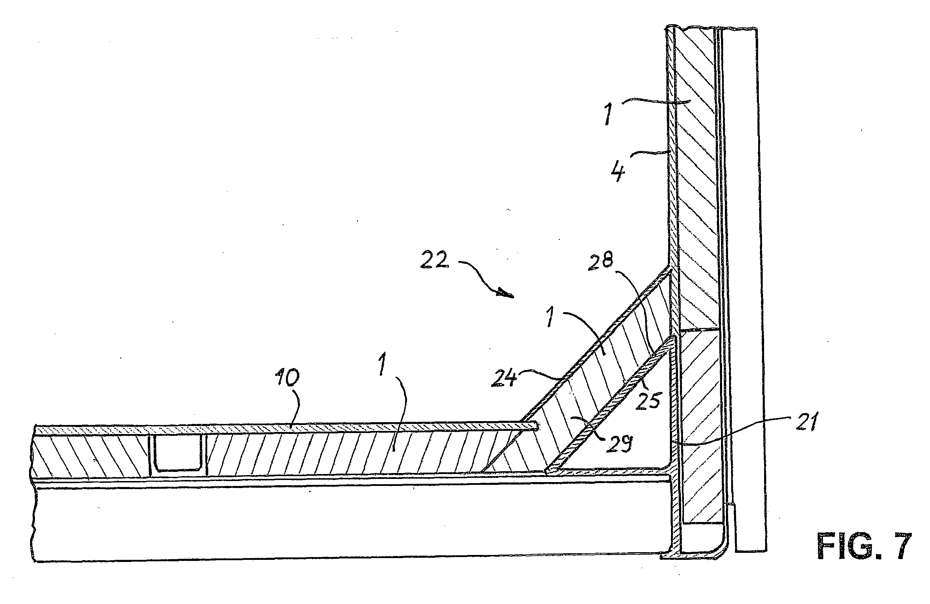

Zusätzlich wird ein Übergangsbereich 22 zwischen dem Muldenboden 10 und Seitenwänden 4 durch ein rechtwinkeliges Profilstück 21 mit einer Schräge 28 (vgl. Fig. 7) verstärkt, wobei die letztere wiederum ein Innenblech 24, ein Außenblech 25 und eine dazwischen liegende Isolationsschicht 29, jedoch ohne Abstandsprofile, umfasst.

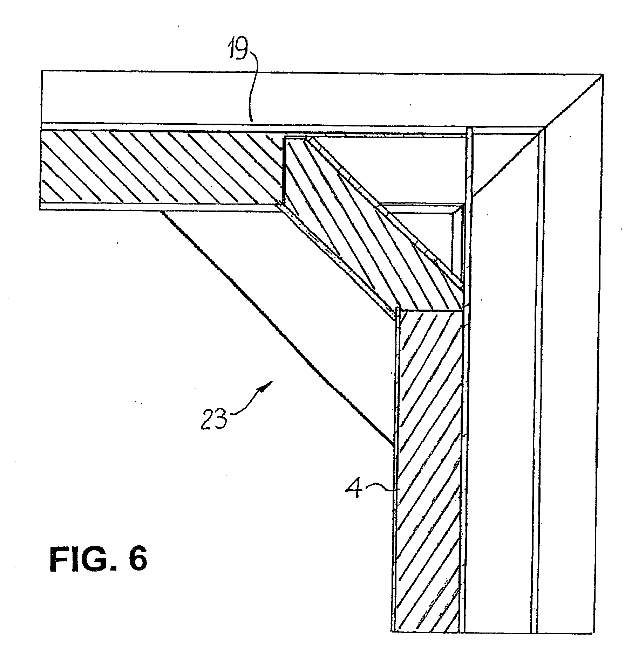

Zwischen der Seitenwand 4 und der Stirnwand 19 (vgl. Fig. 6) ist ebenso ein abgeschrägter Übergangsbereich 23 vorgesehen, welcher jedoch senkrecht zum Muldenboden 10 verläuft.

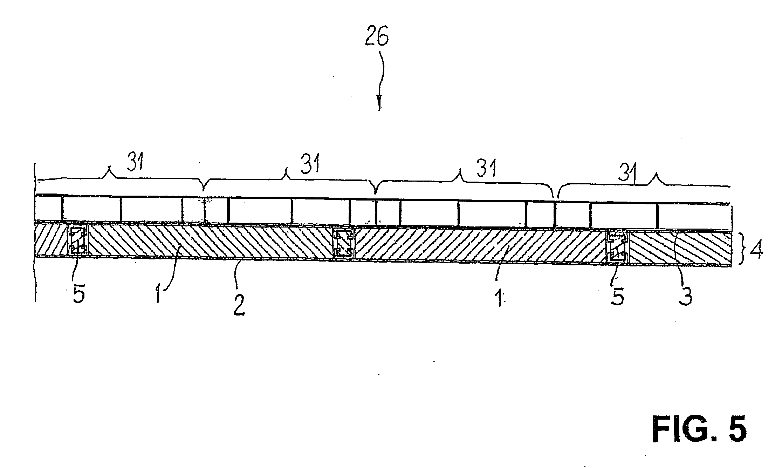

In Fig. 5 ist eine besonders stabile Seitenwand 26 dargestellt, welche sich aus einer bereits beschriebenen, mit Halte- und Abstandsprofilen 8, 8'; 5 verstärkten, voll thermisch isolierten Seitenwand 4 und aus mehreren herkömmlichen, kastenförmigen Strangpressprofilen 31 zusammensetzt, welche an der äußeren Deckschicht 3 aufliegen. Die Hohlräume der Strangpressprofile 31 können mit einem thermoisolierenden Dämmstoff gefüllt sein.

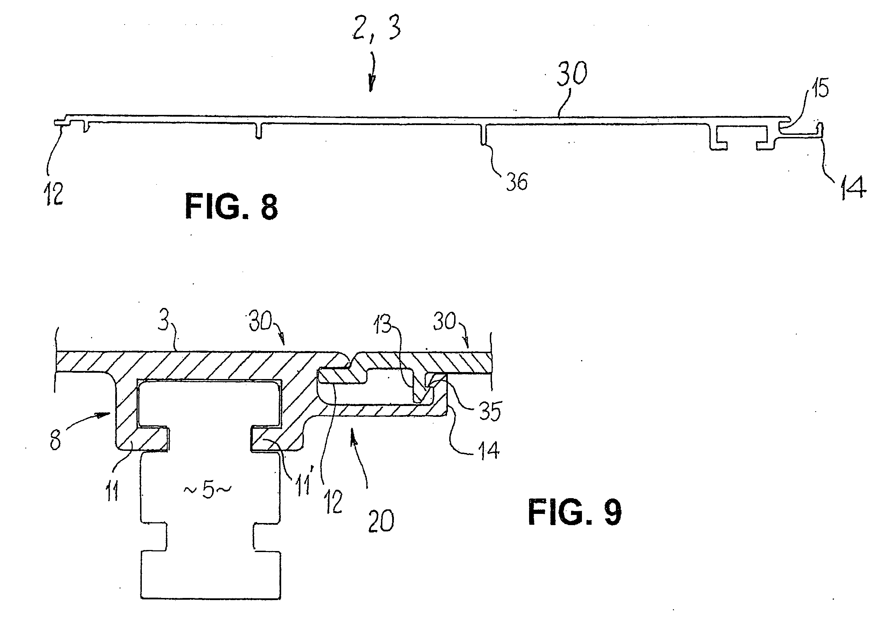

Eine besonders vorteilhafte Ausführungsform der Deckschicht 2 bzw. 3 in Form eines modulartigen Paneels 30 zeigt die Fig. 8. Das Paneel 30 weist zwei speziell geformte, zueinander kompatible Außenkanten 12, 14 auf, welche beim Zusammenfügen zweier sich benachbarten Paneele 30 eine Rast- bzw. Klickverbindung 20 (vgl. Fig. 9) bilden. Am Paneel 30 sind zusätzlich nach innen zeigende Verstärkungsrippen 36 vorgesehen.

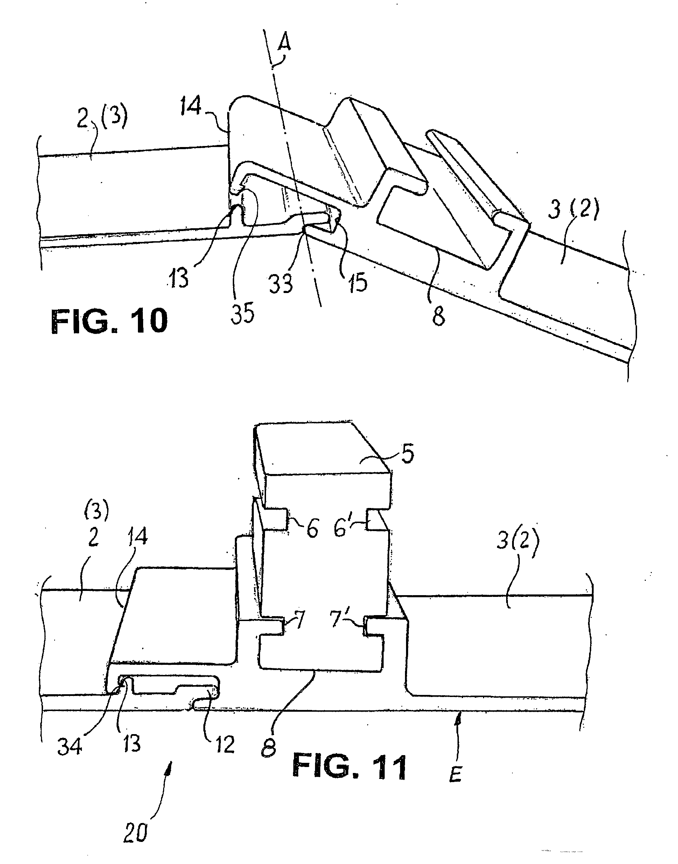

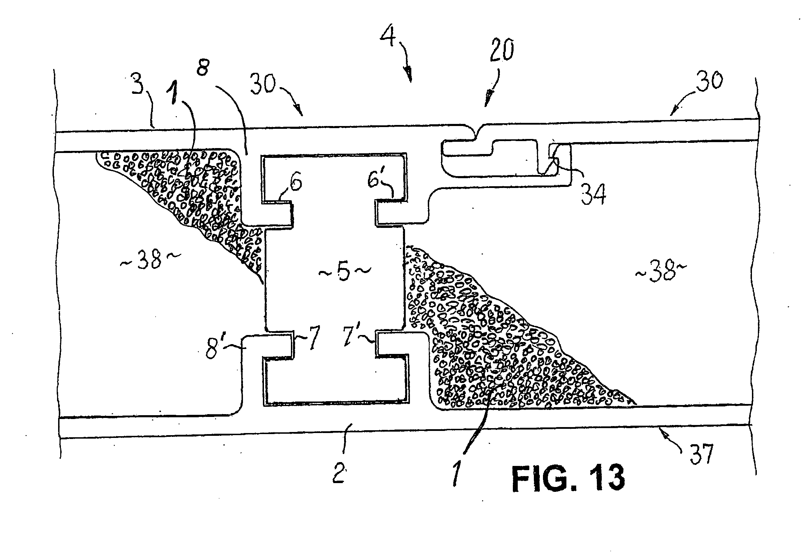

Um eine Klickverbindung 20 herstellen zu können, werden die Paneele 30 in eine zueinander geneigte Stellung (vgl. Fig. 10) gebracht, bei der die eine, nach innen abgesetzte Außenkante 12 eines Paneels in eine Nut 15 des anderen Paneels derart eingelegt wird, dass eine Drehbewegung um eine Drehachse A erfolgen kann. Die Drehachse A ist durch eine äußere, gegenüber der Außenkante 14 zurückversetzte Längskante 33 gebildet. Nach der erfolgten Drehbewegung rastet ein in eine Rastnase 34 (vgl. auch Fig. 13) ausgehender Steg 13 mit einer anderen Rastnase 35 an der Außenkante 14 ein und bildet die besagte Klickverbindung 20 (vgl. Fig. 9). Es ergibt sich eine nahezu fugenlose, in einer gemeinsamen Ebene E (vgl. Fig.11) liegende Oberfläche.

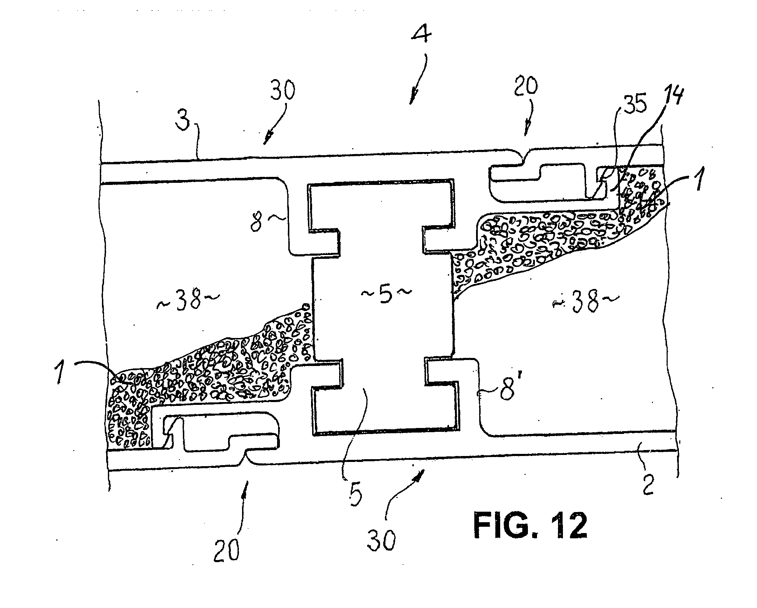

Die Fig. 12 zeigt das Abstandsprofil 5, angeordnet zwischen zwei aufeinander zeigenden Halteprofilen 8, 8', welche jeweils einstückig mit einem Paneel 30 gefertigt sind. Die Paneele 30 einer Deckschicht 2 bzw. 3 sind jeweils über eine Klickverbindung 20 miteinander verbunden. Die Deckschichten 2 und 3 bilden Hohlräume 38, in welchen die plattenförmigen Dämmstoffschichten 1 (ausschnittsweise gezeigt) untergebracht sind.

Bei der Fig. 13 handelt es sich um eine besonders vorteilhafte Ausführungsform der Seitenwand 4, deren äußere Deckschicht 3 aus mehreren Paneelen 30 zusammengesetzt ist, dagegen die gegenüberliegende, innere Deckschicht 2 auf ihrer - im montierten Zustand - dem Muldenboden 10 zugewandten Innenseite 37 völlig fugenlos und glatt ist. Die Klickverbindung 20 verbindet Paneele 30 der äußeren Deckschicht 3 miteinander. Die innere, langgestreckte Deckschicht 2 weist nur die voneinander beabstandeten, C-förmigen Halteprofile 8' auf, welche gegenüber den korrespondierenden Halteprofilen 8 an der äußeren Deckschicht 3 liegen.

Wesentlich ist auch hier, dass die Deckschichten 2, 3 thermisch voneinander entkoppelt sind, um den geforderten Wärmedurchlasswiderstandswert (R-Wert) von ≥ 1,65 m² K/W erreichen zu können.

Natürlich ist die Erfindung nicht auf die dargestellten Ausführungsbeispiele beschränkt. Weitere Ausgestaltungen sind möglich, ohne den Grundgedanken zu verlassen. So ist es beispielsweise auch möglich, die Heckklappe 9 thermisch zu entkoppeln und so zu dämmen, dass auch hier möglichst wenig Wärmeverluste auftreten. Nach der Beladung kann die Transportmulde 100 auch thermisch abgedeckt werden, beispielsweise durch einen Energieverlust möglichst stark hemmende Rollplane, Raffrollo oder einen segmentierten Verdeck. Damit ist die sensible Ladung umlaufend isoliert und führt auch auf Langstrecken zu einer sicheren Beförderung bei Erhalt der gewünschten Temperatur. Es ergeben sich sehr gute Isolierwerte, die den amtlichen Vorschriften entsprechen. Gleichzeitig weisen die Fahrzeuge durch mit der erfindungsgemäßen Isolierung weiterhin eine hohe Nutzlast auf. Die Isolierung ist langlebig und unverrottbar.

### Bezugszeichenliste:

| | |
|---|---|
| 1. | Dämmstoffschicht |
| 2. | Deckschicht |
| 3. | Deckschicht |
| 4. | Seitenwand |
| 5. | Abstandsprofil |
| 6, 6' | Nut |
| 7, 7' | Nut |
| 8, 8' | Halteprofil |
| 9. | Rückwand (Heckklappe; Fig. 2) |
| 10. | Muldenboden (Fig. 7) |
| 11, 11' | C-Schenkel (v. 8) |
| 12. | erste Außenkante (v. 2) |
| 13. | Steg (v. 2) |
| 14. | zweite Außenkante (v. 2) |
| 15. | Nut |
| 16. | Eckbereich (Fig. 4) |
| 17. | Innenblech (v. 10) |
| 18. | Außenblech (v.10) |
| 19. | Stirnwand (Vorderwand) |
| 20. | Klickverbindung |
| 21. | Profilstück |
| 22. | Übergangsbereich (Fig. 7) |
| 23. | Übergangsbereich (Fig. 6) |
| 24. | Innenblech (Fig. 7) |
| 25. | Außenblech (Fig. 7) |
| 26. | Seitenwand (Fig. 5) |
| 27. | Mittelsteg |
| 28. | Schräge |
| 29. | Isolationsschicht |
| 30. | Paneel (Fig. 8) |
| 31. | Strangpressprofil (Fig. 5) |
| 32. | C- Schenkel (Fig 14) |
| 33. | Längskante |
| 34. | Rastnase |
| 35. | Rastnase |
| 36. | Verstärkunqsrippe |
| 37. | Innenseite (Fig. 13) |
| 38. | Hohlraum (Fig. 12, Fig. 13) |
| **100.** | **Transportmulde** |
| A | Drehachse (Schwenkachse) |
| B-B | Schnitt |
| E | Ebene |

## Patentansprüche

1. Transportmulde (100) für den Transport von heißen Gütern, wie Asphalt, Bitumen und/oder Asphaltmischgut, umfassend einen Muldenboden (10), zwei Seitenwände (4), eine Stirnwand (19) und eine Rückwand (9), wobei wenigstens die Seitenwände (4) jeweils aus thermisch entkoppelten metallenen Deckschichten (2, 3) gebildet sind, zwischen denen eine Dämmstoffschicht (1) von niedriger Wärmeleitfähigkeit angeordnet ist,
**dadurch gekennzeichnet, dass**
- die Deckschichten (2, 3) miteinander über wenigstens ein thermoisolierendes und mechanisch stabilisierendes Abstandsprofil (5) verbunden sind,
- wobei die Dämmstoffschicht (1) zwischen den Deckschichten (2, 3) und den sich benachbarten Abstandsprofilen (5) angeordnet ist.

2. Transportmulde (100) nach Anspruch 1, **dadurch gekennzeichnet, dass**
- das Abstandsprofil (5) massiv ist,
- das Abstandsprofil (5) wenigstens zwei voneinander beabstandete, in Längsrichtung des Abstandsprofils (5) verlaufende Nuten (6, 6', 7, 7') aufweist,
- die Deckschichten (2, 3) jeweils wenigstens ein das Abstandsprofil (5) aufnehmendes Halteprofil (8, 8') aufweisen und
- das Abstandsprofil (5) formschlüssig mit den Deckschichten (2, 3) verbunden ist, indem die Halteprofile (8, 8') in die Nuten (6, 6', 7, 7') des Abstandsprofils (5) ineinandergreifen.

3. Transportmulde (100) nach Anspruch 2, **dadurch gekennzeichnet, dass** die Halteprofile (8, 8') aufeinander zeigen.

4. Transportmulde (100) nach Anspruch 2 oder 3, **dadurch gekennzeichnet, dass** das Halteprofil (8, 8') kraft- oder stoffschlüssig mit der Deckschicht (2, 3) verbunden ist.

5. Transportmulde (100) nach einem der Ansprüche 2 bis 4, **dadurch gekennzeichnet, dass** das Halteprofil (8, 8') ein L-, Z-, oder C-Profil ist.

6. Transportmulde (100) nach Anspruch 5, **dadurch gekennzeichnet, dass** das als C-Profil eingesetzte Halteprofil (8, 8') nach innen abgewinkelte C-Schenkel (11, 11') aufweist.

7. Transportmulde (100) nach einem der Ansprüche 1 bis 6, **dadurch gekennzeichnet, dass** wenigstens eine der Deckschichten (2, 3) über eine Klickverbindung (20) mit einer weiteren Deckschicht (2', 3') bei Beibehaltung einer gemeinsamen Ebene (E) verbindbar ist.

8. Transportmulde (100) nach Anspruch 7, **dadurch gekennzeichnet, dass** die Klickverbindung (20) zweier Deckschichten (2, 2'; 3, 3') durch Verrasten einer abgesetzten ersten Außenkante (12) und eines nach innen ragenden Steges (13) der Deckschicht (2; 3) mit einer den Steg (13) übergreifenden, zweiten Außenkante (14) und einer die erste Außenkante (12) aufzunehmenden Nut (15) der benachbarten Deckschicht (2'; 3') entstanden ist.

9. Transportmulde (100) nach einem der Ansprüche 1 bis 8, **dadurch gekennzeichnet, dass** die Deckschichten (2, 3) und Halteprofile (8, 8') aus Aluminiumlegierung gefertigt sind.

10. Transportmulde (100) nach einem der Ansprüche 1 bis 9, **dadurch gekennzeichnet, dass** das Abstandsprofil (5) aus Werkstoff von niedriger Wärmeleitfähigkeit und hoher Temperaturbeständigkeit gebildet ist.

11. Transportmulde (100) nach einem der Ansprüche 1 bis 10, **dadurch gekennzeichnet, dass** die zwischen den Deckschichten (2, 3) angeordnete Dämmstoffschicht (1) aus geschäumten Kunststoff, wie Polyurethanschaum, Phenolharzhartschaum, Melaminharzschaum, Formaldehydharz, aus anorganischem Wärmedämmstoff, wie Mineralwolle, darin Steinwolle oder Glaswolle oder aus Hochtemperaturvlies besteht.

12. Transportmulde (100) nach einem der Ansprüche 1 bis 11, **dadurch gekennzeichnet, dass** zwischen dem Muldenboden (10) und der Seitenwänd (4), Stirnwand (19) und/oder der Rückwand (9) thermisch entkoppelte Übergangsbereiche (22; 23), bevorzugt in der Form von schräg liegenden Stegen angeordnet sind.

13. Transportmulde (100) nach Anspruch 12, **dadurch gekennzeichnet, dass** im Übergangsbereich (22) wenigstens ein thermisch isoliertes Profilstück (21) vorgesehen ist.

14. Sattelkipper oder Kippanhänger **dadurch gekennzeichnet, dass** dieser eine Transportmulde (100) nach einem der vorhergehenden Ansprüche aufweist.
